# EUROPÄISCHE PATENTANMELDUNG

(11) **EP 0 739 659 A1**
(43) Veröffentlichungstag der Anmeldung: **30.10.1996**
(21) Anmeldenummer: 96105885.6
(22) Anmeldetag: 15.04.1996
(51) Int. Cl.: B09C 1/00, B09C 1/02, B09C 1/06, B09B 3/00

(54) **Vorrichtung und Verfahren zur Reinigung von kontaminierten Materialien, insbesondere Erdreich**

(30) Priorität: 24.04.1995 DE 19515029
(71) Anmelder: Mittelmeier, Robert, 82380 Peissenberg (DE)
(72) Erfinder: Mittelmeier, Robert, 82380 Peissenberg (DE)
(74) Vertreter: Skuhra, Udo, Dipl.-Ing.

(57) **Zusammenfassung**

Eine Vorrichtung zur Reinigung von kontaminierten Materialien, insbesondere von Erdreich, mit einem Behälter (1), einer Filtereinheit (8) und einer über mindestens eine Ventileinheit (14) an den Behälter (1) angeschlossenen Leitung (4), ist dadurch gekennzeichnet, daß die Leitung (4) eine Flüssigkeits- bzw. Gaspumpe (6) aufweist, daß der Behälter mit einer Eintritts- und einer Austrittsöffnung (3,2) versehen ist, die miteinander über die Leitung (4) verbunden sind, wobei das in den Behälter eingebrachte Erdmaterial einer Drehung bzw. Umwälzung zwecks Freisetzung von Schadstoffen ausgesetzt wird und der Behälter (1) und die Leitung (4) einen geschlossenen Reinigungskreislauf bilden.

## Beschreibung

Die Erfindung betrifft eine Vorrichtung zur Reinigung von kontaminierten Materialien gemaß dem Oberbegriff des Patentanspruchs 1 sowie ein Verfahren zur Reinigung von kontaminierten Materialien.

In der DE 39 01 100 C1 sind eine Vorrichtung und ein Verfahren zur Dekontaminierung von Schadstoffe enthaltendem Erdreich oder dergleichen beschrieben. Die zu reinigenden Materialien werden in einen Silobehälter geführt, der über Leitungen mit einer gesonderten Vorrichtung zur Einleitung einer Biomasse verbunden ist. Die bekannte Vorrichtung weist somit einen Behälter, eine Filtereinheit und Ventileinheiten auf, durch welche in steuerbarer Weise Zuluft zugeführt werden kann.
Die bekannte Vorrichtung bzw. das bekannte Verfahren basieren auf der Reinigung von dekontaminiertem Erdreich oder dergleichen mit Hilfe von Mikroorganismen.

Der Erfindung liegt die Aufgabe zugrunde, eine Vorrichtung und ein Verfahren der eingangs genannten Art zu schaffen, die auf einfache und effektive Weise eine Reinigung von dekontaminierten Materialien wie Erdreich ermöglichen.

Diese Aufgabe wird bei einer Vorrichtung der eingangs genannten Art durch die im kennzeichnenden Teil des Patentanspruchs 1 angegebenen Merkmale gelöst.

Ein Verfahren zur Reinigung von kontaminiertem Erdreich ist im Patentanspruch 16 angegeben.

Weitere Ausgestaltungen der erfindungsgemäßen Vorrichtung und des erfindungsgemäßen Verfahrens ergeben sich aus den Unteransprüchen.

Die Erfindung schafft eine Vorrichtung und ein Verfahren zur Reinigung von insbesondere kontaminiertem Erdreich, die sich durch einen geschlossenen Kreislauf auszeichnen.

Weiterhin läßt sich die Erfindung in nichtstationärer Weise ausführen, d.h. die Vorrichtung ist mobil und läßt sich an jedem beliebigen Standort einsetzen. Dies wird insbesondere dadurch ermöglicht, daß die Reinigung von kontaminiertem Erdreich ohne Zugabe von Mikroorganismen oder anderen Stoffen realisierbar ist. Damit ist gewährleistet, daß mit einer vorzugsweise mobilen Vorrichtung, die auf einem Fahrzeug oder dergleichen angeordnet sein kann, das kontaminierte Erdreich an Ort und Stelle, z.B. an Tankstellen, in den Behälter verbracht wird und nach seiner Reinigung unmittelbar abgegeben werden kann. Die Erfindung schafft damit eine umweltverträgliche Vorrichtung und ein umweltverträgliches Verfahren ohne Einsatz von die Umwelt beeinträchtigenden Stoffen.

Im folgenden wird eine bevorzugte Ausführungsform der erfindungsgemäßen Vorrichtung zur Erläuterung weiterer Merkmale anhand der Zeichnungen beschrieben.

Es zeigen:
Fig. 1 eine schematische Darstellung der Vorrichtung und des Verfahrens zur Reinigung von kontaminierter Erde oder dergleichen,
Fig. 2 eine Fig. 1 entsprechende Darstellung mit einer zusätzlichen Einrichtung zur Flüssigkeitsabscheidung,
Fig. 3 eine bevorzugte Ausführungsform einer Filtereinheit, die ausgangsseitig des Behälters montiert ist,
Fig. 4 eine schematische Darstellung einer Ausführungsform des Behälters, und
Fig. 5 eine schematische Darstellung der auf einem Fahrzeug montierten erfindungsgemäßen Vorrichtung.

Nachfolgend werden unter Bezugnahme auf die Zeichnungen die erfindungsgemäße Vorrichtung und das erfindungsgemäße Verfahren erläutert.

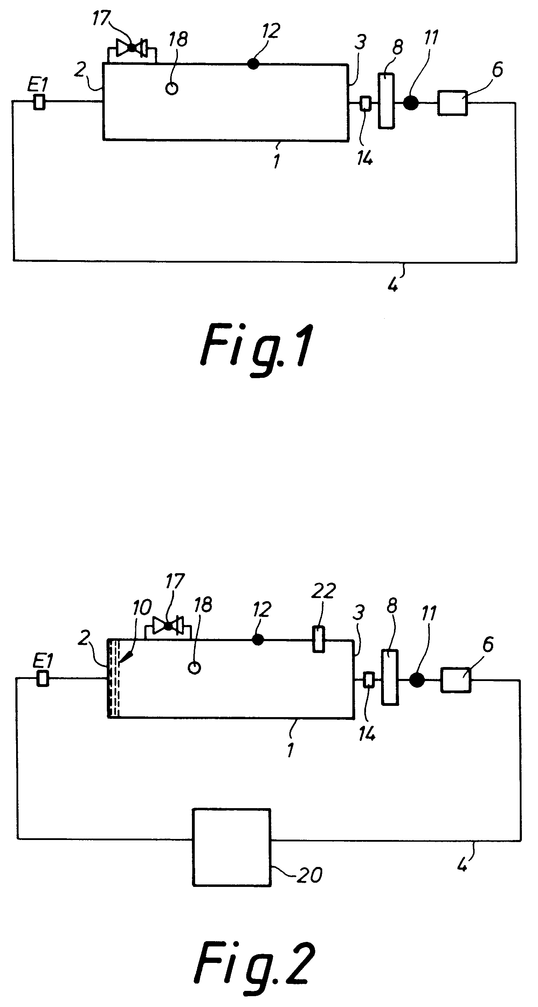

Fig. 1 zeigt in schematischer Darstellung die erfindungsgemäße Vorrichtung, bestehend aus einem Behälter 1 und einer zwischen Behälterausgang 2 und Behältereingang 3 verlaufenden Leitung 4. Innerhalb der Leitung 4 befindet sich eine Pumpe 6, die zum Absaugen einer Gasphase und/oder Flüssigkeitsphase innerhalb des Behälters 1 vorgesehen ist. Hinter der Pumpe 6 befindet sich eine Filtereinheit 8, insbesondere in Form einer Aktivkohlefiltereinheit.

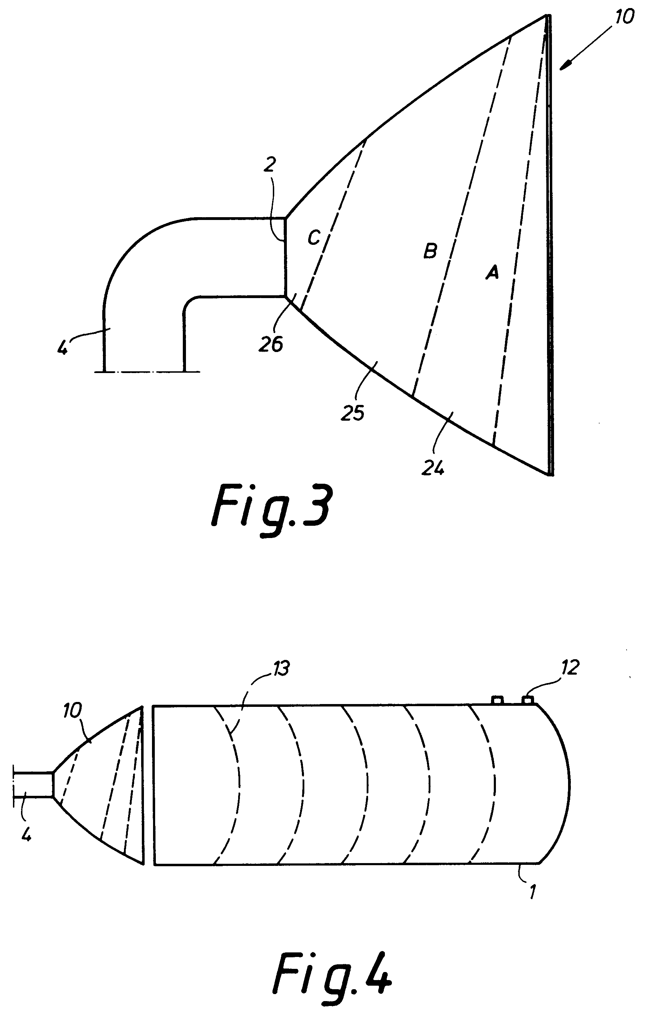

Vor dem Behälterausgang 2 befindet sich eine in Fig. 1 nicht dargestellte Filtereinheit 10, die in Verbindung mit Fig. 3 erläutert wird und dazu dient, den Austritt von Erdpartikeln vorbestimmter Größe aus dem Behälter 1 in die Leitung 4 hinein zu verhindern.

Gemäß einer bevorzugten Ausführungsform befindet sich zwischen dem Aktivkohlefilter 8 und der Pumpe 6 eine Druckmeßeinrichtung 11. Weiterhin ist im Inneren des Behälters 1 eine weitere Druckmeßeinrichtung 12 vorgesehen, wodurch die Druckdifferenz an der Stelle zwischen dem Aktivkohlefilter 8 und der Pumpe 6 einerseits und dem Inneren des Behälters 1 andererseits erfaßbar ist.

Der Behälter 1 ist gemäß einer bevorzugten Ausführungsform im wesentlichen horizontal liegend vorgesehen und um eine horizontale Achse drehfähig gelagert. Gemäß einer weiteren Ausgestaltung der Erfindung kann der Behälter 1 mit einer in seinem Inneren gelagerten Umwälzvorrichtung ausgerüstet sein. Die Drehfähigkeit des Behälters 1 bzw. eine in einem nicht drehfähig gelagerten Behälter 1 ausgebildete Umwälzvorrichtung verfolgen den Zweck, das Erdreich, mit welchem der Behälter 1 beschickt wird, mechanisch aufzulockern und die relative Oberfläche der einzelnen Erdpartikel zu vergrößern.

In einer noch zu beschreibenden Weise wird also der Behälter 1 an Ort und Stelle, an der ein kontaminiertes Erdreich vorliegt, mit dem Erdreich oder mit einem Teil des Erdreiches beschickt, wonach durch Drehung des Behälters 1 oder durch eine im Behälter 1 ausgebildete Umwälzvorrichtung das Erdreich mechanisch aufgelockert und dadurch die relative Oberfläche der Erdpartikel vergrößert wird. Durch diese mechanische Aufbereitung und Erhöhung der relativen Oberfläche der Partikel wird der Dampfdruck der KW-Phase erhöht.

Wie sich aus Fig. 1 ergibt, wird durch die Leitung 4 ausgangs- und eingangsseitig des Behälters 1 unter Einbeziehung des Behälters 1 ein geschlossener Kreislauf gebildet. Eingangsseitig des Behälters 1 befindet sich vor dem Aktivkohlefilter 8 ein Ventil 14. Zum Absaugen der Gasphase im Behälter 1 und zur Erzeugung eines Unterdrucks im Behälter 1 wird das Ventil 14 geschlossen bzw. reduziert, nachdem die Pumpe 6 eingeschaltet wird, infolgedessen über den Behälterausgang 2 die durch Bewegung des Erdreiches im Behälter 1 erzeugte Gasphase aus dem Behälter 1 abgesaugt wird. Das Ventil 14 wird hierbei so gesteuert, daß ein vorgegebener Unterdruck im Behälter 1 aufrechterhalten wird.

Durch die Erzeugung eines Unterdrucks vorbestimmter Höhe im Behälter 1 wird der Dampfdruck von adhäsiv an die Erdreichmaterialkörner gebundenen Kohlenwasserstoffen erhöht. Dieser Effekt kann noch dadurch verstärkt werden, daß durch eine nicht dargestellte Heizeinrichtung die Innentemperatur des Behälters 1 erhöht wird, wodurch eine Reaktionsbeschleunigung bei der Absonderung der Kohlenwasserstoffe aus dem Erdreich erreicht wird. Die im Behälter 1 befindliche Gasphase, d.h. ein Luft/Kohlenwasserstoffgemisch, wird über die Leitung 4 und die Pumpe 6 zu dem Aktivkohlefilter 8 geleitet und lagert sich adhäsiv an die Aktivkohle des Aktivkohlefilters 8 an.

Zur Steuerung des Unterdrucks im Behälter 1 bzw. des am Aktivkohlefilter 8 erzeugten Überdrucks dienen die Druckmeßgeräte 11, 12, die über einen Komparator und eine Steuerelektronik das Ventil 14 steuern.

Bei einer weiteren Ausführungsform ist am Behälter 1 ein Sicherheitsventil 17 vorgesehen, welches zum Beispiel bei plötzlich ansteigendem Druck wirksam wird und eine Durckentlastung ermöglicht. Das Sicherheitsventil 17 kann durch die Druckmeßeinrichtung 12 gesteuert sein.

Über einen im Behälter 1 vorgesehenen Sensor 18 wird der Zustand des Luft/Kohlenwasserstoffgemischs erfaßt, so daß der vorstehend beschriebene Vorgang so lange durchgeführt wird, bis vorgegebene Werte vom Sensor 18 festgestellt werden. Nach der Reinigung des auf diese Weise behandelten Erdreiches wird die Drehung des Behälters 1 bzw. die Umwälzung des darin befindlichen Erdreiches unterbrochen, das Ventil 14 wird vollständig geöffnet bei gleichzeitiger Abschaltung der Pumpe 6, wonach in noch zu beschreibender Weise das Erdreich aus dem Behälter 1 entleert wird.

Wenn das Erdreich, mit dem der Behälter 1 beschickt wird, schwerflüchtige Kohlenwasserstoffe enthält, enthält die Leitung 4 vorteilhafterweise zusätzlich einen Leichtflüssigkeitsabscheider 20, der in Fig. 2 dargestellt ist. Weiterhin wird zur Reinigung des Erdreiches in dem Behälter 1 über eine Zuführleitung 22 ein Gemisch, vorzugsweise ein Wasser-Tensid-Gemisch, eingeführt, wonach in der in bezug auf Fig. 1 beschriebenen Weise die Reinigung des Erdreiches im Behälter 1 durch Aktivierung der Pumpe 6 und der Erzeugung eines Überdrucks am Aktivkohlefilter 8 sowie eines Unterdrucks im Behälterinneren des Behälters 1 vorgenommen wird. Hierbei wird ein Luft-Wasser-Gemisch, d.h. das Wasser-Tensid-Gemisch, über die Pumpe 6 im Kreislauf gepumpt, so daß nach erfolgter Trennung der schwerflüchtigen Kohlenwasserstoffe aus dem Erdreich die Tenside durch den Leichtflüssigkeitsabscheider 20 wieder abgesondert werden können. Da Tenside biologisch fast zu 100% abbaubar sind, können sie nach der vorgenommenen Trennung von der Kohlenwasserstoffphase über den Abscheider 20 in eine Kanalisation eingeleitet werden.

Das am Aktivkohlefilter 8 erhaltene Konzentrat wie auch das aus dem Abscheider 20 abgeleitete Konzentrat können mit relativ geringem Aufwand und ohne Risiko entsorgt oder recycelt werden.

In Fig. 2 ist dargestellt, daß an dem Austrittsende des Behälters 1 die Filtereinheit 10 vorgesehen ist, die beispielsweise aus drei hintereinandergeschalteten Einzelfiltern besteht und verhindert, daß Festpartikel während des Reinigungsprozesses in die Leitung 4 gelangen. Diese Filtereinheit 10 ist derart aufgebaut, daß sie einen Eintritt von pellitischem Material mit einer Korngröße von beispielsweise 0,2 bis 0,02 mm in den Kreislauf bzw. in die Leitung 4 verhindert. Gemäß einer ersten Ausführungsform sind drei einzelne Filter hintereinandergeschaltet und ergeben die Filtereinheit 10, wobei diese Filter Durchlaßgrößen zwischen 15 mm bis zu mindestens 0,2 mm herab aufweisen.

Eine derartige Filtereinheit 10 ist in Fig. 3 dargestellt. Sie besteht aus einem ersten Filter 24, einem zweiten Filter 25 und einem dritten Filter 26, die in dieser Reihenfolge vom Inneren des Behälters in der Richtung auf den Behälterausgang 2 angeordnet sind. Das Filter 24 stellt beispielsweise ein Grobfilter für 15 mm Porengröße, das Filter 25 ein Filter mit einer Porengröße bis maximal 5 mm und das Filter 26 ein Feinfilter mit einer Porengröße von 0,2 mm dar, wobei die Struktur der Filter abhängig von dem zu reinigenden Erdmaterial gewählt wird. Wie sich aus Fig. 3 ergibt, sind die Filter 24, 25, 26 schräg zur Horizontalen geneigt, d.h. in Fig. 3 gegenüber der Vertikalen nach links geneigt, was den Vorteil hat, daß sie eine gewisse Selbstreinigung sicherstellen, da an den Filterflächen, die zum Behälterinnenraum weisen, anhaftende Flüssigkeitspartikel und Feststoffpartikel nach unten abfallen. Hierdurch wird ein Verstopfen der Filter vermieden. Die Filtereinheit 10 ist gemäß Fig. 3 in Richtung auf die Öffnung 2 verjüngend ausgebildet. An die Öffnung 2 schließt sich dann eine Leitung 4, beispielsweise ein Kunststoff- oder Gummischlauch an, der säurefest und -dicht ist und eine Verbindung zu der Leitung 4 bzw. zu der Pumpe 6 herstellt.

Fig. 4 zeigt eine Ausführungsform eines Behälters 1. Der Behälter 1 ist, wie strichliert dargestellt ist, mit schneckenförmigen Metalleisten an seinem Innenumfang versehen, die dazu dienen, das eingebrachte Erdreich während einer Drehung des Behälters zu durchmischen, während diese schneckenförmige Metallförderleisten 13 auch dazu dienen können, die Entleerung des Behälters 1 in einer gekippten Stellung sicherzustellen. Die Filtereinheit 10, die in Fig. 4 links dargestellt ist, schließt den Behälter 1 in Richtung auf die Öffnung 2 ab, wobei die Filtereinheit 10 vorzugsweise eine stationäre Einheit darstellt, während der übrige Behälter 1 aus der Horizontalen und/oder Vertikalen verschwenkbar ist.

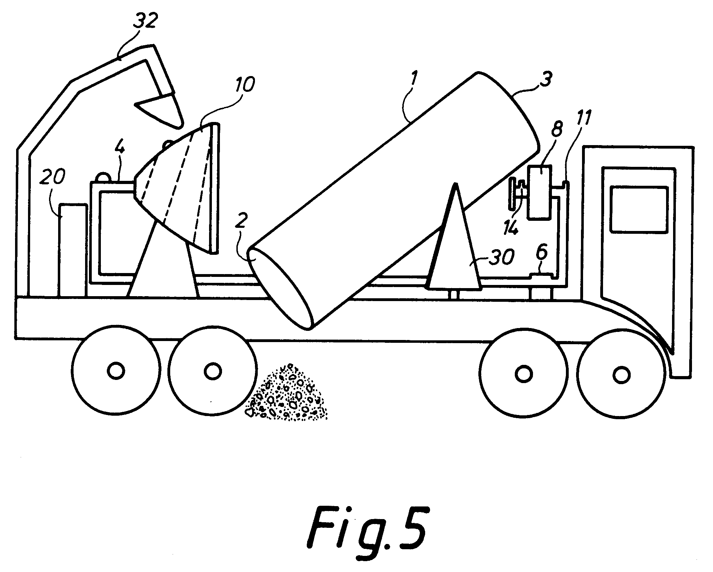

Fig. 5 zeigt eine bevorzugte Ausführungsform einer mobilen Ausbildung der erfindungsgemäßen Vorrichtung. Gemäß Fig. 5 ist der Behälter 1 drehfähig auf einem Lastwagen oder dergleichen angeordnet und außerdem gegenüber einer Lagerung 30 aus der Horizontalen und gegenüber der Vertikalen verschwenkbar, um die Entleerung des gesäuberten Erdmaterials zu gestatten. Mit Hilfe einer nicht dargestellten Steuerung wird der Behälter 1 aus der in Fig. 5 gezeigten Stellung wieder in eine im wesentlichen horizontale Stellung verbracht, in welcher er auf seiner linken Seite mit der Filtereinheit 10 einen luft- und flüssigkeitsdichten Abschluß bildet. Ausgangsseitig der Filtereinheit 10 befindet sich die Leitung 4, die an vorgegebener Stellung in Verbindung steht mit dem Leichtflüssigkeitsabscheider 20. Die Verbindung zum Leichtflüssigkeitsabscheider 20 kann aber kurzgeschlossen werden, wodurch sich die in Fig. 1 gezeigte Struktur ergibt. Die Leitung 4 führt, wie in Verbindung mit Fig. 1 und 2 beschrieben ist, über die Pumpe 6 zum Aktivkohlefilter 8 und von dort über ein Ventil 14 zum Behälter 1 bzw. dessen Eintrittsöffnung 3.

Zur Aufnahme der aus dem Leichtflüssigkeitsabscheider 20 und/oder dem Aktivkohlefilter 8 austretenden Konzentrate kann ein zusätzlicher, nicht dargestellter Behälter vorgesehen sein.

Die Erfindung schafft somit eine vorzugsweise mobile Vorrichtung und ein Verfahren zur Reinigung von kontaminierten Materialien wie kontaminiertem Erdreich. Zur Reinigung wird das Erdreich entsprechend Fig. 5 über einen auf dem Fahrgestell montierten Bagger 32 in den Behälter 1 eingebracht, der zu diesem Zweck in eine solche Lage gebracht wird, daß er auf seiner dem Filter 10 zugewandten Seite beschickt werden kann. Danach wird der Behälter 1 in eine Stellung verbracht, in welcher ein flüssigkeits- und gasdichter Abschluß gegenüber der Filtereinheit 10 gewährleistet ist. Danach wird das Erdmaterial durch eine Umwälzeinrichtung wie Rührarme oder durch Drehung des Behälters 1, der vorzugsweise trommelförmige Gestalt besitzt, infolge der in ihm vorgesehenen schneckenförmigen Metallleisten oder dergleichen umgewälzt, wodurch eine Auflockerung des Aushubmaterials bewirkt wird. Hierbei kommt es zu einer Freisetzung von leichtflüssigen Schadstoffen, insbesondere von leichtflüssigen Kohlenwasserstoffen zum Beispiel BTEX oder, bei steigender Temperaturen, auch vor mittel- bis langkettigen Kohlenwasserstoffen, welche als Gasphase in den überlagerten, geschlossenen Innenraum des Behälters 1 übergehen und sich dort anreichern. Diese leichtflüchtigen bzw. gasförmigen Schadstoffe werden als kontaminierte Überluft aus dem Behälter 1 mit Hilfe der Pumpe 6 abgesaugt und in den beschriebenen, geschlossenen Kreislauf durch Reinigungsfilter der beschriebenen Art geleitet, gereinigt, wonach die gereinigte Luft wieder in den Behälter 1 zurückgeführt wird, sich erneut mit flüchtigen Schadstoffen anreichern kann und im wiederholten Kreislauf so lange gereinigt wird, bis keine flüchtigen Schadstoffe mehr auftreten oder der Schadstoffgehalt eine vorbestimmte Grenze unterschritten hat. In dem Filter 8, vorzugsweise einem Aktivkohlefilter, werden die Schadstoffe an das Filtermaterial adsorbiert.

Durch die Erfindung wird damit erreicht, daß kontaminiertes Erdreich nicht einfach abzutransportieren ist, sondern daß es zum Zwecke seiner Reinigung an Ort und Stelle von den Schadstoffen befreit und an Ort und Stelle wieder abgeladen wird. Hierdurch verringern sich die Transportkosten und -risiken erheblich.

Zur Reinigung von Böden, die durch schwerflüchtige Kohlenwasserstoffe oder dergleichen kontaminiert sind, wird gemäß vorstehender Beschreibung ein Flüssigkeitsabscheider zugeschaltet, so daß im wesentlichen eine im geschlossenen Kreislauf stattfindende, umlaufende Flüssigkeitsreinigung mit Hilfe eines Wasser-Tensid-Gemischs erfolgt. Das in den Behälter 1 geleitete Wasser schwemmt die in Flüssigphase befindlichen Kohlenwasserstoffe, insbesondere schwerflüchtige Kohlenwasserstoffe, aus dem sich umwälzenden Erdreichmaterial aus, so daß sich diese schwerflüchtigen Kohlenwasserstoffe dem Spülwasser beimischen und im Reinigungskreislauf zu dem Flüssigkeitsabscheider 20 gepumpt werden. In dem Flüssigkeitsabscheider schwimmt die physikalisch leichtere Phase zum Beispiel MKW-Phase auf und wird in einen Sammelbehälter bzw. in Transportbehälter abgepumpt und entsorgt.

Mit der Erfindung ist es damit möglich, z.B. an einer zu sanierenden Tankstelle das Erdreich direkt zu reinigen und das gereinigte Erdreich direkt dort wieder abzulagern. Ein Abtransport des Erdreichs und das Auffüllen mit neuem Erdreich erübrigt sich damit.

Grundsätzlich läßt sich das erfindungsgemäße Verfahren auch zur Dekontamination von bakteriologisch und viral verseuchten Böden anwenden, wobei die Bakterien und Viren durch den Zusatz von gasförmigen, flüssigen oder löslichen Desinfektionsmitteln zur Umluft oder zum Reinigungswasser unschädlich gemacht werden.

Gemäß einer weiteren Ausgestaltung der Erfindung wird das in dem Behälter 1 eingebrachte Erdmaterial durch Erhitzen der zirkulierenden Umluft über einen zwischengeschalteten Heißluftofen oder auf der Basis einer anderen Erwärmung auf eine bakterien- bzw. virenzerstörende Temperatur von beispielsweise 100°C, im Falle von temperaturresistenten Viren auf 300-400°C oder etwa 800°C erhitzt. Auf diese Weise werden auch die resistenten Viren zerstört.

Das erfindungsgemäße Verfahren zeichnet sich dadurch aus, daß zum ersten der Behälter zu seiner Beschickung mit kontaminiertem Erdreich in eine Befüllposition verbracht wird, das Erdmaterial in den Behälter 1 eingeführt wird und dann der Behälter 1 in eine Betriebsstellung verbracht wird, in derer gegenüber einer Leitung mit Filtereinheit und Pumpe in einen geschlossenen Kreislauf verlagert wird. Hierbei ist austrittsseitig des Behälters eine Filtereinheit zur Reinigung bzw. zur Vermeidung eines Eintritts von Erdpartikeln in den geschlossenen Kreislauf angeordnet. Anschließend wird der Behälter 1 entweder direkt in eine Drehbewegung versetzt oder das in ihm befindliche Material wird auf andere Weise umgewälzt. Durch die Rührwirkung bzw. Bewegung des Erdmaterials werden die Schadstoffe freigesetzt und ergeben eine Anreicherung in dem Behälterraum in Form einer Gasphase, die mittels der Pumpe 6 abgepumpt wird. Zusätzlich kann der Innenraum des Behälters 1 aufgeheizt werden, um eine Beschleunigung der Reaktion und/oder eine Zerstörung von Viren etc. sicherzustellen. Hierbei wird die Gasphase über ein Aktivkohlefilter gepumpt, an dem die flüchtigen Schadstoffe adsorbiert werden, bevor die abgepumpte Luftströmung wieder in dem Behälter 1 zum Abziehen weiterer Schadstoffe eingeleitet wird. Die Steuerung des hinter der Pumpe bzw. zwischen der Pumpe 6 und dem Behälter 1 befindlichen Ventils 14 erfolgt derart, daß in den Behälter 1 während des Reinigungsprozesses ein nahezu konstanter Unterdruck besteht, während das Aktivkohlefilter 8 auf einem nahezu konstanten Überdruck liegt. Dieses Reinigungsverfahren wird so lange durchgeführt, bis vorgegebene Grenzwerte erreicht oder unterschritten werden.

Sind in dem Erdreich nur oder zusätzlich schwerflüchtige Kohlenwasserstoffe enthalten, kann in den Kreislauf ein Leichtflüssigkeitsabscheider eingeschaltet werden. Gemäß der Erfindung kann somit zuerst das Verfahren analog der Prinzipschaltung nach Fig. 1 durchgeführt werden, wonach anschließend die schwerflüchtigen Kohlenwasserstoffe durch Zuschalten des Abscheiders 20 und Einbringen von Reinigungsflüssigkeit der beschriebenen Art entfernt werden.

Ist dagegen ein nur mit schwerflüchtigen Kohlenwasserstoffen oder dergleichen kontaminiertes Erdreich zu reinigen, wird nur das Verfahren gemäß Fig. 2 angewandt, d.h. es wird nach Einbringen des Erdreiches in den Behälter 1 eine Reinigungsflüssigkeit in Form eines beispielsweise Wasser/Tensid-Gemischs eingebracht und durch den Kreislauf bis zum Leichtflüssigkeitsabschneider 20 zirkuliert, in welchem die Trennung der Tenside von der Kohlenwasserstoff-Phase erfolgt. Das Kohlenwasserstoffkonzentrat. Kann nach Separation von Wasser/Tensidgemisch in Fässer abgefüllt und gegebenenfalls recycelt werden.

Beim Vorliegen von sowohl schwerflüchtigen als auch leichtflüchtigen Kohlenwasserstoffen wird das erfindungsgemäße Verfahren vorzugsweise derart durchgeführt, daß eine allmähliche Temperaturerhöhung im Behälter 1 bis auf 380°C, gegebenenfalls bis hinauf auf 800°C gesteuert wird. Hierdurch werden auch die leichtflüchtigen Kohlenwasserstoffe zum größten Teil eliminiert. Alternativ hierzu kann das Verfahren auch so ausgeführt werden, daß zuerst die leichtflüchtigen Kohlenwasserstoffe dadurch entfernt werden, daß der in Verbindung mit Fig. 1 beschriebene Kreislauf gesteuert wird ohne Einsatz eines Leichtflüssigkeitsabscheiders, wonach dann als zusätzlicher Verfahrensschritt die Beimischung eines Wasser/Tensidgemischs zur Reinigung des Erdreiches erfolgt, wie dies in Verbindung mit Fig. 2 beschrieben ist.

Bei beiden Verfahrensarten lieg ein geschlossener Kreislauf vor. Die Beimischung des Wasser/Tensidgemischs in den Behälter 1 bewirkt eine Vermischung mit dem im Behälter 1 vorliegenden Erdreich. Hierdurch lassen sich die schwerflüchtigen Kohlenwasserstoffe aus dem zu reinigenden Erdreich entziehen und werden zusammen mit dem Wasser/Tensidgemisch zum Flüssigkeitsabscheider geführt. Im Flüssigkeitsabscheider 20 werden die Kohlwasserstoffe in Form eines Ölfilms vom Wasser/Tensidgemisch getrennt und in den Abscheider 20 geführt, während das gereinigte Wasser/Tensidgemisch im Kreislauf zurück über das Aktivkohlefilter 11 in den Behälter 1 geleitet wird. Im Aktivkohlefilter 11 werden die im Wasser/Tensidgemisch enthaltenen Schadstoffe adsorbiert.

Ist eine Adsorption der im Wasser/Tensidgemisch befindlichen Schadstoffe mittels des Aktivkohlefilters 11 nicht erwünscht, kann das Aktivkohlefilter 11 durch eine nicht dargestellte Leitung überbrückt werden.

## Patentansprüche

1. Vorrichtung zur Reinigung von kontaminierten Materialien, insbesondere von Erdreich, mit einem Behälter, einer Filtereinheit und einer über mindestens eine Ventileinheit an den Behälter angeschlossenen Leitung,
**dadurch gekennzeichnet**,
daß die Leitung (4) eine Flüssigkeits- bzw. Gaspumpe (6) aufweist,
daß der Behälter (1) mit einer Eintritts- und einer Austrittsöffnung (3, 2) versehen ist, die miteinander über die Leitung (4) verbunden sind, wobei das in den Behälter (1) eingebrachte Erdmaterial einer Drehung bzw. Umwälzung zwecks Freisetzung von Schadstoffen ausgesetzt wird und der Behälter (1) und die Leitung (4) einen geschlossenen Reinigungskreislauf bilden.

2. Vorrichtung nach Anspruch 1,
**dadurch gekennzeichnet**,
daß die Filtereinheit aus einer Aktivkohlefiltereinheit (8) besteht.

3. Behälter nach Anspruch 1 oder 2,
**dadurch gekennzeichnet**,
daß in der Nähe der Behälteraustrittsöffnung (2) eine Reinigungsfiltereinheit (10) angeordnet ist.

4. Vorrichtung nach wenigstens einem der vorangehenden Ansprüche,
**dadurch gekennzeichnet**,
daß die Ventileinheit (14) an der Eintrittsöffnung (3) des Behälters (1) vorgesehen ist, während die Pumpe (6) vor der Ventileinheit (14) in die Leitung (4) geschaltet ist.

5. Vorrichtung nach wenigstens einem der vorangehenden Ansprüche,
**dadurch gekennzeichnet**,
daß die Aktivkohlefiltereinheit (8) zwischen der Pumpe (6) und der Ventileinheit (14) vorgesehen ist.

6. Vorrichtung nach wenigstens einem der vorangehenden Ansprüche,
**dadurch gekennzeichnet**,
daß zwischen Behälteraustrittsöffnung (2) und Behältereintrittsöffnung (3) ein Leichtflüssigkeitsabscheider (20) vorgesehen ist.

7. Vorrichtung nach Anspruch 6,
**dadurch gekennzeichnet**,
daß der Leichtflüssigkeitsabscheider (20) vor der Pumpe (6) vorgesehen ist.

8. Vorrichtung nach wenigstens einem der vorangehenden Ansprüche,
**dadurch gekennzeichnet**,
daß eine Heizeinrichtung zur Erhöhung der Temperatur innerhalb des Behälters (1) vorgesehen ist.

9. Vorrichtung nach wenigstens einem der vorangehenden Ansprüche,
**dadurch gekennzeichnet**,
daß eine Zuführung (18) zur Einleitung von Reinigungsflüssigkeit vorgesehen ist.

10. Vorrichtung nach wenigstens einem der vorangehenden Ansprüche,
**dadurch gekennzeichnet**,
daß eine Druckmeßeinheit (11, 12) zur Feststellung des Drucks im Behälter (1) und/oder in der Leitung (4) vorgesehen ist.

11. Vorrichtung nach wenigstens einem der vorangehenden Ansprüche,
**dadurch gekennzeichnet**,
daß der Behälter (1) aus einer drehfähig gelagerten Trommel besteht.

12. Vorrichtung nach wenigstens einem der Ansprüche 1 bis 11,
**dadurch gekennzeichnet**,
daß der Behälter (1) eine Umwälzvorrichtung für das zu reinigende Material enthält.

13. Vorrichtung nach wenigstens einem der vorangehenden Ansprüche,
**dadurch gekennzeichnet**,
daß der Behälter (1) aus seiner Arbeitsposition heraus in eine Beschickungs- bzw. Entleerungsposition verlagerbar ist.

14. Vorrichtung nach wenigstens einem der vorangehenden Ansprüche,
**dadurch gekennzeichnet**,
daß der Behälter (1) einen separaten Kopfabschnitt aufweist, welcher die Reinigungsfiltereinheit (10) enthält, wobei der Kopfabschnitt im wesentlichen stationär vorgesehen ist.

15. Vorrichtung nach wenigstens einem der vorangehenden Ansprüche,
**dadurch gekennzeichnet**,
daß mindestens der Behälter (1) und die Leitung (4) auf einem mobilen Gestell oder dergleichen angeordnet sind.

16. Verfahren zur Reinigung von kontaminierten Materialien, insbesondere von Erdreich,
bei dem ein Behälter mit kontaminiertem Erdmaterial beschickt wird, wonach das Erdmaterial umgewälzt wird, daß die sich im Behälter befindliche Luft durch die Umwälzung des Erdmaterials mit leichtflüchtigen Schadstoffen angereichert wird,
daß die mit Schadstoffen angereicherte Luft aus dem Behälter zu einem Filter abgepumpt wird, an dem sich die Schadstoffe adsorbieren, wobei im Behälter ein Unterdruck und im Filter ein Überdruck erzeugt wird, und
daß nach Adsorption der Schadstoffe am Filter die gereinigte Luft in den Behälter eingeleitet und wieder mit Schadstoffen angereichert wird, wonach der vorstehende Vorgang des Abpumpens wiederholt wird.

17. Verfahren nach Anspruch 15,
**dadurch gekennzeichnet**,
daß der Unterdruck im Behälter und der Überdruck an dem Filter durch eine Ventileinheit gesteuert wird.

18. Verfahren zur Reinigung von kontaminierten Materialien, insbesondere von Erdreich,
bei dem ein Behälter mit kontaminiertem Erdmaterial beschickt und anschließend ein flüssiges Reinigungsmittel beigemischt wird, wonach das Erdmaterial umgewälzt wird und das mit Schadstoffen angereicherte flüssige Reinigungsmittel in einem geschlossenen Kreislauf über einen Flüssigkeitsabscheider gepumpt wird.

19. Verfahren nach wenigstens einem der vorangehenden Ansprüche,
**dadurch gekennzeichnet**,
daß über eine Heizeinrichtung die Temperatur im Inneren des Behälters erhöht wird.

20. Verfahren nach Anspruch 18 oder 19
**dadurch gekennzeichnet**,
daß nach Abscheiden der Reinigungsflüssigkeit im Flüssigkeitsabscheider ein Schadstoffkonzentrat erhalten und zu einem Filter zweckes Adsorbtion am Filter gepumpt wird.
